# EUROPEAN PATENT APPLICATION

(11) **EP 4 668 368 A1**
(43) Date of publication of application: **24.12.2025**
(21) Application number: 24756925.4
(22) Date of filing: 14.02.2024
(51) Int. Cl.: H01M 4/62, H01G 11/30, H01G 11/38, H01G 11/86, H01M 4/13, H01M 4/139, H01M 4/1391, H01M 4/525

(54) **METHOD FOR PRODUCING ELECTRODE, ELECTRODE, AND NON-AQUEOUS ELECTROLYTE SECONDARY BATTERY**

(30) Priority: 17.02.2023 JP 2023023400
(71) Applicant: Panasonic Intellectual Property Management Co., Ltd., Kadoma-shi, Osaka 571-0057 (JP)
(72) Inventor: IZUMI Reiko, Kadoma-shi, Osaka 571-0057 (JP); YAMASHITA Hiroki, Kadoma-shi, Osaka 571-0057 (JP)
(74) Representative: Eisenführ Speiser
(86) International application number: PCT/JP2024/005092
(87) International publication number: WO 2024/172085

(57) **Abstract**

The present invention provides a method for producing an electrode with which it is possible to obtain a mixture sheet exhibiting good stretchability.

This method for producing an electrode (10) is characterized by including a mixture sheet preparation step in which a powder (20) of an electrode mixture including an active material and a fibrous binder and having a solid content concentration of substantially 100% is molded into a sheet shape to prepare a mixture sheet (12), and a bonding step in which the mixture sheet (12) is bonded to the surface of a core material (11), wherein the binder contains polytetrafluoroethylene having a shear bond stress of 40 kPa or less as a main component.

## Description

### TECHNICAL FIELD

The present disclosure relates to a method for producing an electrode, an electrode, and a non-aqueous electrolyte secondary battery including the electrode.

### BACKGROUND

An electrode of a non-aqueous electrolyte secondary battery such as a lithium ion secondary battery is generally prepared by a wet method in which an electrode mixture slurry containing an active material, a binder, and the like is applied to a surface of a core material which is a metal foil, and a coating film is dried and compressed. In this case, there is a problem that migration in which the binder moves during drying of the coating film is likely to occur. When migration of the binder occurs, the amount of the binder is greater on the surface side of the coating film (electrode mixture layer) than on the core material side, and the distribution of the binder in the thickness direction of the electrode mixture layer is biased.

In recent years, a dry method in which a mixture sheet is prepared by stretching an electrode mixture powder to form a sheet, and the sheet is bonded to a core material to produce an electrode has been studied. Patent Literature 1 discloses an electrode mixture sheet prepared by mixing an active material, a fibrillatable binder such as polytetrafluoroethylene (PTFE), and a conductive agent using a mill and fibrillating PTFE.

### CITATION LIST

### PATENT LITERATURE

Patent Literature 1: JP 2019-512872 A

### SUMMARY

Meanwhile, when a mixture sheet is prepared by a dry method, the mixture sheet is required to have good stretchability. If the stretchability of the sheet is poor, for example, the productivity of the electrode may be reduced, or the strength of the electrode in the thickness direction may be reduced.

Therefore, an object of the present disclosure is to provide a method for producing an electrode with which it is possible to obtain a mixture sheet exhibiting good stretchability.

A method for producing an electrode according to the present disclosure includes a mixture sheet preparation step of preparing a mixture sheet by forming an electrode mixture powder including an active material and a fibrous binder and having a solid content concentration of substantially 100% into a sheet shape, and a bonding step of bonding the mixture sheet to a surface of a core material, in which the binder contains polytetrafluoroethylene having a shear bond stress less than or equal to 40 kPa as a main component.

An electrode according to the present disclosure includes a core material and a mixture sheet bonded to a surface of the core material, in which the mixture sheet contains an active material and a fibrous binder, and the binder contains polytetrafluoroethylene having a shear bond stress less than or equal to 40 kPa as a main component.

The non-aqueous electrolyte secondary battery according to the present disclosure includes the electrode. The configuration of the electrode is preferably applied to a positive electrode.

With the method for producing an electrode according to the present disclosure, it is possible to provide an electrode including a mixture sheet exhibiting good stretchability.

### BRIEF DESCRIPTION OF DRAWINGS

FIG. 1 is a cross-sectional view of an electrode as an example of an embodiment.
FIG. 2 is a view showing a step of preparing an electrode mixture and a step of preparing a mixture sheet from the electrode mixture.
FIG. 3 is a view showing a step of bonding a mixture sheet to a surface of a core material.

### DESCRIPTION OF EMBODIMENTS

Hereinafter, an embodiment of an electrode according to the present disclosure will be described in detail. The embodiments described below are merely examples, and the present disclosure is not limited to the following embodiments. The drawings referred to in the description of embodiments are schematically shown, and the dimensional ratios and the like of the components drawn in the drawings should be determined in consideration of the following description. Further, the present disclosure includes a configuration obtained by selectively combining a plurality of embodiments and modifications to be described below.

The electrode and the method for producing the electrode according to the present disclosure are suitable for a non-aqueous electrolyte secondary battery such as a lithium ion secondary battery, but can also be applied to a battery containing an aqueous electrolyte or a power storage device such as a capacitor. Hereinafter, an electrode for a non-aqueous electrolyte secondary battery will be described as an example. The configuration and production method of the electrode for a non-aqueous electrolyte secondary battery according to the present disclosure may be applied to a negative electrode, but are particularly preferably applied to a positive electrode. A non-aqueous electrolyte secondary battery includes an electrode assembly including a positive electrode and a negative electrode, and a non-aqueous electrolyte. The non-aqueous electrolyte includes, for example, a non-aqueous solvent and a lithium salt dissolved in the non-aqueous solvent.

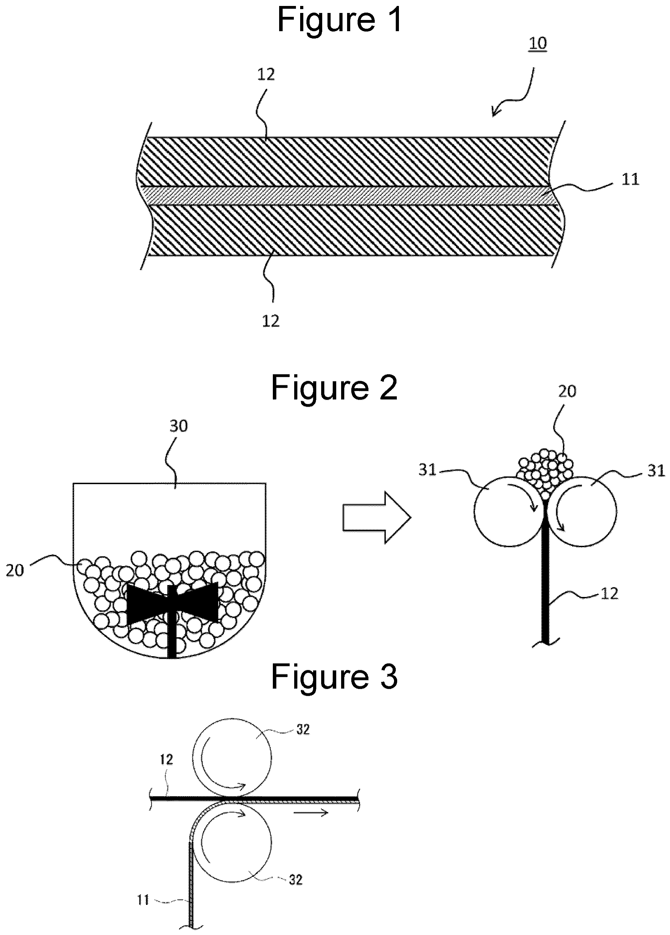

FIG. 1 is a cross-sectional view of an electrode as an example of an embodiment. As shown in FIG. 1, an electrode 10 includes a core material 11 and a mixture sheet 12 bonded to a surface of the core material 11. The mixture sheet 12 is preferably bonded to both surfaces of the core material 11. The mixture sheet 12 is prepared by forming an electrode mixture powder described later into a sheet shape, and is bonded to the core material 11 to form an electrode mixture layer. The electrode 10 may be an elongated electrode constituting a wound electrode assembly or a rectangular electrode constituting a laminated electrode assembly.

As the core material 11, a metal foil, a film having a metal layer formed on a surface thereof, or the like can be used. The thickness of the core material 11 is, for example, greater than or equal to 5 µm and less than or equal to 20 µm. When the electrode 10 is a positive electrode, for example, a metal foil of aluminum, an aluminum alloy, or the like can be used for the core material 11. When the electrode 10 is a negative electrode, for example, a metal foil of copper, a copper alloy, or the like can be used for the core material 11.

The mixture sheet 12 contains an active material and a fibrous binder. The thickness of the mixture sheet 12 applied to a non-aqueous electrolyte secondary battery is, for example, greater than or equal to 50 µm and less than or equal to 150 µm, preferably greater than or equal to 80 µm and less than or equal to 140 µm, and more preferably greater than or equal to 100 µm and less than or equal to 130 µm.

The mixture sheet 12 may further include a conductive agent. In particular, when the mixture sheet 12 constitutes a positive electrode mixture layer, it is preferable to contain a conductive agent. Examples of the conductive agent contained in the mixture sheet 12 include carbon black such as acetylene black and Ketjenblack, and carbon materials such as carbon nanotubes (CNTs) and graphite. When the electrode 10 is a positive electrode, a preferred example of the content of the conductive agent in the mixture sheet 12 is greater than or equal to 0.2 mass% and less than or equal to 5.0 mass%.

As the active material for the positive electrode, for example, a lithium transition metal composite oxide is used. Examples of a metal element contained in the lithium transition metal composite oxide include Ni, Co, Mn, Al, B, Mg, Ti, V, Cr, Fe, Cu, Zn, Ga, Sr, Zr, Nb, In, Sn, Ta, and W. Among them, it is preferable to contain at least one type selected from Ni, Co, and Mn. In particular, as the composition of the lithium transition metal composite oxide, the proportion of Ni in metal elements other than lithium is preferably greater than or equal to 70% and less than or equal to 99%, and more preferably greater than or equal to 80% and less than or equal to 95%. The content of the positive electrode active material is preferably greater than or equal to 85 mass% and less than or equal to 99 mass%, and more preferably greater than or equal to 90 mass% and less than or equal to 99 mass% with respect to the mass of the mixture sheet 12 (the preferred content of the negative electrode active material is also the same as the content of the positive electrode active material).

The positive electrode active material is formed of, for example, secondary particles formed by aggregation of a plurality of primary particles. The volume-based median diameter (D50) of the positive electrode active material is preferably greater than or equal to 3 µm and less than or equal to 30 µm. D50 means a particle diameter in which the cumulative frequency in a volume-based particle size distribution is 50% from the smallest particle diameter, and is also referred to as a median diameter. The particle size distribution of the positive electrode active material can be measured by a laser diffraction type particle size distribution measuring apparatus (for example, MT3000II manufactured by MicrotracBEL Corp.) using water as a dispersion medium.

Examples of the active material for the negative electrode include carbon-based active materials including natural graphite such as flake graphite, massive graphite, and earthy graphite, and artificial graphite such as massive artificial graphite (MAG) and graphitized mesophase-carbon microbeads (MCMB). As the negative electrode active material, an active material containing Si, Sn, or the like to be alloyed with lithium may be used.

The fibrous binder contains polytetrafluoroethylene having a shear bond stress less than or equal to 40 kPa as a main component. The fibrous binder is prepared, for example, by using a particulate binder containing polytetrafluoroethylene as a main component as a raw material and fibrillating the particulate binder. In the present description, the main component means a constituent component having the highest mass ratio.

Meanwhile, the electrode has a problem of increasing the strength of the electrode mixture in the thickness direction of the electrode. By increasing the strength of the electrode mixture in the thickness direction of the electrode, for example, it may be possible to prevent damage to the mixture sheet caused by stress applied to the electrode when a wound electrode assembly is prepared. In a method for producing the electrode 10 of the present embodiment to be described later, the mixture sheet 12 is prepared by a method in which an electrode mixture powder having a solid content concentration of substantially 100% is formed into a sheet, a so-called dry method, but by incorporating a fibrous binder containing polytetrafluoroethylene having a shear bond stress less than or equal to 40 kPa as a main component in the electrode mixture powder, the mixture sheet 12 having good stretchability is obtained, and thereby the strength of the electrode mixture in the thickness direction of the electrode 10 is increased. That is, the electrode 10 of the present embodiment includes the mixture sheet 12 containing a fibrous binder containing polytetrafluoroethylene having a shear bond stress less than or equal to 40 kPa as a main component, and thus has a high strength with respect to the strength of the electrode mixture in the thickness direction of the electrode 10.

When a positive electrode active material, which has a high Ni content greater than or equal to 70% with respect to metal elements other than Li, and in which the content of Co, which is a cost-increasing factor of the positive electrode active material, is reduced, is used, the strength of the mixture sheet of the positive electrode and the strength of the electrode mixture in the thickness direction of the positive electrode are often not sufficiently obtained. However, by incorporating a fibrous binder containing polytetrafluoroethylene having a shear bond stress less than or equal to 40 kPa as a main component in the mixture sheet, the strength of the mixture sheet of the positive electrode and the strength of the mixture sheet in the thickness direction of the positive electrode are sufficiently obtained, and therefore, when a positive active material having a high Ni content greater than or equal to 70% is used, it is extremely effective to use polytetrafluoroethylene having a shear bond stress less than or equal to 40 kPa.

A method for adjusting the shear bond stress of polytetrafluoroethylene is not particularly limited, and examples thereof include a method for imparting at least one of a branched structure (also referred to as a branching structure), a crosslinked structure, and denaturation to polytetrafluoroethylene from the viewpoint that it is easy to adjust the shear bond stress less than or equal to 40 kPa. The branched structure is a structure having a side chain branched from a main chain. The method for imparting a branched structure to a molecule of polytetrafluoroethylene is not particularly limited, and examples thereof include a method for irradiating PTFE particles or fibrillated fibrous PTFE as a raw material with an electron beam or radiation. The crosslinked structure is a structure in which molecules of polytetrafluoroethylene are crosslinked. For example, a crosslinked structure can be imparted to a molecule of polytetrafluoroethylene by adding a crosslinking agent at the time of synthesis of polytetrafluoroethylene. The denaturation refers to copolymerization of tetrafluoroethylene with another monomer.

The shear bond stress of polytetrafluoroethylene need only be less than or equal to 40 kPa, but is preferably less than or equal to 30 kPa, and more preferably greater than or equal to 10 kPa and less than or equal to 30 kPa from the viewpoint of further improving the stretchability of the mixture sheet 12, and further improving the strength of the mixture sheet 12 in the thickness direction of the electrode 10.

The shear bond stress of polytetrafluoroethylene is measured by the following procedure using, for example, a powder layer shear force measuring apparatus NS-S500 (manufactured by Nano Seeds Corporation) as a commercially available product.
(1) Into a columnar cell (upper fixed cell, lower movable cell) having an inner diameter of 15 mm, 10 g of a sample (polytetrafluoroethylene) is put and an upper pestle is lowered to apply a load such that the vertical load on the upper surface is 50 N, thereby forming a compacted powder layer.
(2) The position of the upper pestle is fixed, and the lower movable cell is moved in the horizontal direction while the volume of the compacted powder layer is maintained. After the shear stress is maximized and stabilized, the lower movable cell is lowered downward to gradually lower the shear stress until the shear stress is minimized. The shear stress is plotted against the bottom load normal stress detected in a lower part of the cell to obtain a powder layer rupture envelope (PYL curve).
(3) In the powder layer rupture envelope, a straight line is obtained by a least-squares method from a curve from a limit point at which the shear stress is maximized to a point at which the shear stress is minimized at the end of the measurement.
(4) A section of the obtained straight line is a shear bond stress of the sample (polytetrafluoroethylene).

The content of the fibrous binder is, for example, preferably greater than or equal to 0.1 parts by mass and less than or equal to 5.0 parts by mass, more preferably greater than or equal to 0.2 parts by mass and less than or equal to 3 parts by mass, and particularly preferably greater than or equal to 0.3 parts by mass and less than or equal to 2 parts by mass, with respect to 100 parts by mass of the active material, from the viewpoint of further improving the stretchability of the mixture sheet 12 and further improving the strength of the electrode 10 in the thickness direction. The binder has a crystallite size, for example, greater than or equal to 20 nm and less than or equal to 45 nm. The crystallite size of the binder is determined by X-ray diffraction measurement.

When the mixture sheet 12 is divided into three equal parts in the thickness direction to form a first region, a second region, and a third region from the core material 11 side, a content (a) of the binder 22 in the first region, a content (b) of the binder 22 in the second region, and a content (c) of the binder 22 in the third region preferably satisfy (c - a)/(a + b + c) ≤ ±10%, and more preferably satisfy (c - a)/(a + b + c) ≤ ±5%. According to the method for producing the electrode 10 of the present embodiment described later, uneven distribution of the binder in a part of the mixture sheet 12 is prevented, and the binder can be substantially uniformly present in the entire mixture sheet 12, so that the contents (a), (b), and (c) of the binder can satisfy the above formula.

The density of the mixture sheet 12 is not particularly limited, but is preferably greater than or equal to 2.5 g/cc and less than or equal to 4.5 g/cc, more preferably greater than or equal to 3.0 g/cc and less than or equal to 4.2 g/cc, and particularly preferably greater than or equal to 3.0 g/cc and less than or equal to 4.0 g/cc when the mixture sheet 12 constitutes a positive electrode mixture layer. The electrode 10 may be provided with an intermediate layer interposed between the core material 11 and the mixture sheet 12. The intermediate layer contains, for example, a conductive agent and a binder, and may improve the bonding strength of the mixture sheet 12 to the core material 11 and reduce the interface resistance.

Hereinafter, a method for producing the electrode 10 will be described with reference to FIGS. 2 and 3. Hereinafter, a method for producing a positive electrode will be described as an example, but this production method can be similarly applied to the production of a negative electrode. FIG. 2 shows a step of preparing an electrode mixture and a step of preparing a mixture sheet from the electrode mixture, and FIG. 3 shows a step of bonding the mixture sheet to a core material.

The electrode 10 is produced through the following steps.
(1) an electrode mixture preparation step of preparing an electrode mixture powder containing an active material and a fibrous binder and having a solid content concentration of substantially 100%
(2) a mixture sheet preparation step of preparing a mixture sheet 12 by forming the electrode mixture powder into a sheet shape
(3) a bonding step of bonding the mixture sheet 12 to a surface of a core material 11

### (Electrode mixture preparation step)

An electrode mixture powder 20 shown in FIG. 2 is obtained, for example, by stirring and mixing raw materials such as an active material, a particulate binder, and a conductive agent with a mixer 30. The electrode mixture powder 20 has a solid content concentration of substantially 100%. The particulate binder in the raw material is fibrillated to become a fibrous binder by stirring and mixing with the mixer 30. The content of the fibrous binder (that is, the content of the particulate binder) is as described above.

The particulate binder used in the first step contains polytetrafluoroethylene (PTFE) as a main component. The particulate binder may contain a component other than PTFE such as polyvinylidene fluoride (PVdF) as long as the object of the present disclosure is not impaired, but may contain substantially only PTFE. The average particle diameter of the particulate binder is not particularly limited, but is preferably greater than or equal to 100 µm and less than or equal to 500 µm, and more preferably greater than or equal to 200 µm and less than or equal to 400 µm. The average particle diameter of the particulate binder can be determined by observing PTFE particles with a scanning electron microscope (SEM). Specifically, 100 randomly selected particles are extracted, the diameters of the circumscribed circles of the 100 particles are measured, and the measured values are averaged to obtain the average particle diameter.

Polytetrafluoroethylene as the main component of the binder is polytetrafluoroethylene having a shear bond stress less than or equal to 40 kPa as described above. For example, when the binder is irradiated with an electron beam or radiation to adjust the shear bond stress of polytetrafluoroethylene less than or equal to 40 kPa, the particulate binder may be irradiated with an electron beam or radiation, or the fibrous binder after fibrillation may be irradiated with an electron beam or radiation. In any case, the shear bond stress of polytetrafluoroethylene contained in the electrode mixture powder 20 obtained in the electrode mixture preparation step need only be less than or equal to 40 kPa.

As the mixer 30, a conventionally known mechanical stirring mixer capable of applying a mechanical shear force can be used. Specific examples of the mixer 30 include a cutter mill (such as a wonder crusher manufactured by Osaka Chemical Co., Ltd.), a pin mill, a bead mill, a kneading machine (such as a kneader, a Banbury mixer), a planetary mixer, and a fine particle composing machine (an apparatus in which a shear force is generated between a rotor that has a special shape and rotates at a high speed inside a tank and a collision plate).

The mixing time (a time for applying a shear force to the mixture raw material) by the mixer 30 varies depending on the type of the mixer 30 and the like, but is preferably within several minutes, and is, for example, greater than or equal to 0.5 minutes and less than or equal to 10 minutes. The mixing with the mixer 30 may include a step of mixing the active material with the conductive agent, and a step of mixing the mixture of the active material and the conductive agent with the binder.

In the dry mixing of the active material with the conductive agent, for example, a mechano-fusion method may be used. By applying the mechano-fusion method, the bonding force of the conductive agent to the particle surface of the active material becomes strong. Examples of a mechano-fusion reactor include NOBILTA (registered trademark) and MECHANO FUSION (registered trademark) manufactured by Hosokawa Micron Corporation, a hybridization system manufactured by Nara Machinery Co., Ltd., BALANCE GRAN manufactured by FREUND-TURBO CORPORATION, and COMPOSI manufactured by Nippon Coke & Engineering Co., Ltd.

By stirring and mixing the raw materials with the mixer 30, the electrode mixture powder 20 that contains an active material and a fibrous binder containing polytetrafluoroethylene having an internal frictional angle greater than or equal to 45 degrees as a main component and that has a solid content concentration of substantially 100% is obtained. The electrode mixture powder 20 obtained with the mixer 30 may be used for preparing the mixture sheet 12, but the electrode mixture powder 20 obtained with the mixer 30 may be supplied to a pair of rolls (not shown) to be formed into a sheet to promote fibrillation of PTFE. Specifically, the electrode mixture powder 20 is supplied to a gap formed between a pair of rolls, and is rolled with the pair of rolls to be formed into a sheet. By supplying the electrode mixture powder 20 to a pair of rolls to form a sheet, a particulate binder that is not fibrillated can be fibrillated in the electrode mixture. The obtained sheet of the electrode mixture is pulverized with, for example, a pulverizer or the like and returned to the electrode mixture powder 20. As the pulverizer, a conventionally known pulverizer is used.

### (Mixture sheet preparation step)

In the mixture sheet preparation step, the mixture sheet 12 is prepared by a dry method using the electrode mixture powder 20 obtained in the electrode mixture preparation step.

In the mixture sheet preparation step, as shown in FIG. 2, the electrode mixture powder 20 is supplied to a pair of rolls 31 and rolled through the gap formed between the pair of rolls 31 to prepare a positive electrode mixture sheet 12. Note that the rotation axes of the rolls shown in FIG. 2 are parallel, and the arrows drawn in the rolls indicate the rotation directions of the rolls.

The thickness of the mixture sheet 12 can be controlled by, for example, a gap between rolls, a peripheral speed of the roll, the number of times of passing through the rolls, and the like. In the mixture sheet preparation step, the electrode mixture powder 20 may be formed into a sheet shape using rolls having a peripheral speed ratio different by 2 times or more. By making the peripheral speed ratio of the rolls different, the thinning of the mixture sheet 12 is facilitated, and the productivity is improved. In the mixture sheet preparation step, the mixture sheet 12 may be finally compressed. The linear pressure at that time is, for example, greater than or equal to 1 t/cm and less than or equal to 3 t/cm.

### (Bonding step)

In the bonding of the mixture sheet 12 and the core material 11, for example, a pair of rolls 32 shown in FIG. 3 is used. When the mixture sheet 12 and the core material 11 pass through the rolls 32, the electrode 10 in which the mixture sheet 12 is bonded to the surface of the core material 11 is obtained. In FIG. 3, the mixture sheet 12 is bonded only to one surface of the core material 11, but may be bonded to both surfaces of the core material 11. In this case, the two mixture sheets 12 may be simultaneously bonded to both surfaces of the core material 11, or after the first mixture sheet 12 is bonded to one surface of the core material 11, the second mixture sheet 12 may be bonded to the other surface of the core material 11.

At least one of the pair of rolls 32 may be heated. The temperature of these rolls is preferably higher than or equal to room temperature and lower than or equal to 300°C, and more preferably higher than or equal to room temperature and lower than or equal to 200°C. The linear pressure between the rolls 32 is, for example, greater than or equal to 0.1 t/cm and less than or equal to 2 t/cm. An intermediate layer such as an adhesive layer may be formed on both surfaces of the core material 11 to be subjected to the bonding step.

The electrode 12 thus obtained may be subjected to a compression step as necessary. Specifically, the electrode 12 may be conveyed to a predetermined gap provided between a pair of opposing rolls, and compressed in the gap. The linear pressure between the rolls compressing the electrode 12 is, for example, greater than or equal to 1 t/cm and less than or equal to 3 t/cm.

As in the method for producing the electrode 10 of the present embodiment, by incorporating a fibrous binder containing polytetrafluoroethylene having a shear bond stress less than or equal to 40 kPa as a main component in an electrode mixture powder used when the mixture sheet 12 is prepared by a dry method and having a solid content concentration of substantially 100%, the mixture sheet 12 having good stretchability is obtained, and the strength of the electrode mixture in the thickness direction of the electrode 10 is increased.

### EXAMPLES

Hereinafter, the present disclosure will be further explained with reference to Examples. However, the present disclosure is not limited to these Examples.

### <Example 1>

### [Preparation of positive electrode mixture sheet]

A carbon-coated positive electrode active material in which carbon black was attached to the particle surface of the positive electrode active material was prepared by mixing 1,000 g of a lithium transition metal composite oxide as a positive electrode active material having a Ni amount of 89% and 10 g of carbon black for 5 minutes using NOB300-NOBILTA (registered trademark) manufactured by Hosokawa Micron Corporation. The carbon-coated positive electrode active material and PTFE particles (CD097, manufactured by AGC Inc.) having a shear bond stress of 39.0 kPa were put in a wonder crusher manufactured by Osaka Chemical Co., Ltd. at a mass ratio of 101 : 0.8, and subjected to a mixing treatment at room temperature and the rotation speed at scale 3 for 2 minutes. The maximum rotation speed of the wonder crusher is 28,000 rpm at scale 10.

The mixture subjected to the mixing treatment was formed into a sheet shape by rolling with a pair of opposing rolls, and then the formed sheet was pulverized with a pulverizer. By such a treatment, the PTFE particles were fibrillated to form fibrous PTFE, and a positive electrode mixture in which the carbon-coated positive electrode active material and the fibrous PTFE were uniformly dispersed was obtained. The obtained positive electrode mixture was a powder having a solid content concentration of 100%.

The positive electrode mixture powder was formed into a sheet by rolling with a pair of rolls 31 shown in FIG. 2 to prepare a positive electrode mixture sheet. The peripheral speed ratio of the pair of rolls 31 at that time was set to 1 : 1, and the linear pressure between the rolls 31 was set to 0.1 t/cm. The tensile strength of the obtained positive electrode mixture sheet subjected to the first rolling was evaluated. The mixture sheet obtained by the first rolling was stretched with the pair of rolls 31 to prepare a stretched positive electrode mixture sheet. The peripheral speed ratio of the pair of rolls 31 at that time was set to 1 : 2, the linear pressure between the rolls 31 was set to 0.5 t/cm, and the gap between the rolls 31 was set to half the film thickness of the positive electrode mixture sheet before stretching, and the stretchability at that time was evaluated. Finally, the obtained positive electrode mixture sheet was allowed to pass through two rolls at room temperature and repeatedly stretched until a given film thickness was reached to obtain a positive electrode mixture sheet used for a positive electrode.

The stretchability of the positive electrode mixture sheet obtained by the first rolling with the pair of rolls 31 was evaluated based on the following criteria. The results are shown in Table 1.
∘: The sheet is not broken while the positive electrode mixture powder is formed into a sheet shape
×: The sheet is broken while the positive electrode mixture powder is formed into a sheet shape

In addition, the tensile strength of the positive electrode mixture sheet obtained by the first rolling was measured. The tensile strength was measured under the condition of a tensile speed of 2 cm/min with a lateral tensile jig using a universal tester. The results of the tensile strength are shown in Table 1.

### [Preparation of positive electrode]

As shown in FIG. 3, the positive electrode mixture sheet and the core material were pressed (linear pressure: 1 t/cm) by a pair of opposing rolls 32 to obtain a positive electrode in which the positive electrode mixture sheet was bonded to both surfaces of the core material. When the positive electrode mixture sheet (positive electrode mixture layer) was divided into three equal parts in the thickness direction to form a first region, a second region, and a third region from the core material side, a content (a) of fibrous PTFE in the first region, a content (b) of fibrous PTFE in the second region, and a content (c) of fibrous PTFE in the third region satisfy (c - a) × 100/(a + b + c) = 0.01 (1%).

### <Example 2>

A positive electrode mixture sheet and a positive electrode were prepared in the same manner as in Example 1 except that PTFE particles (DF681, manufactured by Solvay) having a shear bond stress of 35.4 kPa were used in place of the PTFE particles having a shear bond stress of 39.0 kPa in the preparation of the positive electrode mixture sheet. Then, in the same manner as in Example 1, the stretchability of the positive electrode mixture sheet was evaluated, and the tensile strength of the positive electrode mixture sheet was measured. These results are shown in Table 1.

### <Example 3>

A positive electrode mixture sheet and a positive electrode were prepared in the same manner as in Example 1 except that PTFE particles (208, manufactured by Daikin Industries, Ltd.) having a shear bond stress of 28.8 kPa were used in place of the PTFE particles having a shear bond stress of 39.0 kPa in the preparation of the positive electrode mixture sheet. Then, in the same manner as in Example 1, the stretchability of the positive electrode mixture sheet was evaluated, and the tensile strength of the positive electrode mixture sheet was measured. These results are shown in Table 1.

### <Example 4>

A positive electrode mixture sheet and a positive electrode were prepared in the same manner as in Example 1 except that PTFE particles (JF4DE1201, manufactured by Juhua Co., Ltd.) having a shear bond stress of 22.4 kPa were used in place of the PTFE particles having a shear bond stress of 39.0 kPa in the preparation of the positive electrode mixture sheet. Then, in the same manner as in Example 1, the stretchability of the positive electrode mixture sheet was evaluated, and the tensile strength of the positive electrode mixture sheet was measured. These results are shown in Table 1.

In Example 4, the strength of the positive electrode mixture in the thickness direction of the positive electrode was measured by the following method. The positive electrode was attached onto a 120 mm × 30 mm acrylic plate through a double-sided tape to prepare a measurement sample. A measurement probe having a diameter of 2 mm and a double-sided tape attached thereto was pressed at 400 gf for 10 seconds against the surface of the measurement sample laid flat and fixed, and then the measurement probe was raised upward at a speed of 600 mm/min to measure the strength when the positive electrode mixture was peeled off using a tacking tester (TAC-II) manufactured by RHESCA Corporation. This measured value was taken as the strength of the positive electrode mixture in the thickness direction of the positive electrode.

### <Example 5>

A positive electrode mixture sheet and a positive electrode were prepared in the same manner as in Example 1 except that PTFE particles (640, manufactured by The Chemours Company) having a shear bond stress of 16.4 kPa were used in place of the PTFE particles having a shear bond stress of 39.0 kPa in the preparation of the positive electrode mixture sheet. Then, in the same manner as in Example 1, the stretchability of the positive electrode mixture sheet was evaluated, and the tensile strength of the positive electrode mixture sheet was measured. These results are shown in Table 1.

### <Example 6>

A positive electrode mixture sheet and a positive electrode were prepared in the same manner as in Example 1 except that PTFE particles (TF2073Z, manufactured by 3M Company) having a shear bond stress of 15.9 kPa were used in place of the PTFE particles having a shear bond stress of 39.0 kPa in the preparation of the positive electrode mixture sheet. Then, in the same manner as in Example 1, the stretchability of the positive electrode mixture sheet was evaluated, and the tensile strength of the positive electrode mixture sheet was measured. In addition, the strength of the positive electrode mixture in the thickness direction of the positive electrode was measured in the same manner as in Example 4. These results are shown in Table 1.

### <Comparative Example 1>

A positive electrode mixture sheet and a positive electrode were prepared in the same manner as in Example 1 except that PTFE particles (CD123E, manufactured by AGC Inc.) having a shear bond stress of 69.4 kPa were used in place of the PTFE particles having a shear bond stress of 39.0 kPa in the preparation of the positive electrode mixture sheet. Then, the stretchability of the positive electrode mixture sheet was evaluated in the same manner as in Example 1. In addition, the strength of the positive electrode mixture in the thickness direction of the positive electrode was measured in the same manner as in Example 4. These results are shown in Table 1.

### <Comparative Example 2>

A positive electrode mixture sheet and a positive electrode were prepared in the same manner as in Example 1 except that PTFE particles (TF2035Z, manufactured by 3M Company) having a shear bond stress of 62.5 kPa were used in place of the PTFE particles having a shear bond stress of 39.0 kPa in the preparation of the positive electrode mixture sheet. Then, the stretchability of the positive electrode mixture sheet was evaluated in the same manner as in Example 1. The results are shown in Table 1.

### <Comparative Example 3>

A positive electrode mixture sheet and a positive electrode were prepared in the same manner as in Example 1 except that PTFE particles (GN7040, manufactured by GFL) having a shear bond stress of 56.2 kPa were used in place of the PTFE particles having a shear bond stress of 39.0 kPa in the preparation of the positive electrode mixture sheet. Then, the stretchability of the positive electrode mixture sheet was evaluated in the same manner as in Example 1. The results are shown in Table 1.

**[Table 1]**

| | PTFE | Evaluation of positive electrode mixture sheet | | Evaluation of positive electrode |
|---|---|---|---|---|
| | Shear bond stress (kPa) | Stretchability | Sheet tensile strength (MPa) | Strength (gf) of positive electrode mixture in thickness direction of positive electrode |
| Example 1 | 39.0 | ○ | 0.007 | - |
| Example 2 | 35.4 | ○ | 0.008 | - |
| Example 3 | 28.8 | ○ | 0.009 | - |
| Example 4 | 22.4 | ○ | 0.009 | 354.2 |
| Example 5 | 16.4 | ○ | 0.010 | - |
| Example 6 | 15.9 | ○ | 0.011 | 363.5 |
| Comparative Example 1 | 69.4 | × | - | 221.7 |
| Comparative Example 2 | 62.5 | × | - | - |
| Comparative Example 3 | 56.2 | × | - | - |

As shown in Table 1, in all of the Examples, the positive electrode mixture sheet had good stretchability. On the other hand, in all of the Comparative Examples, the positive electrode mixture sheet was broken, and had poor stretchability. From these results, it can be said that a mixture sheet exhibiting good stretchability can be obtained by using a fibrous binder containing polytetrafluoroethylene having a shear bond stress less than or equal to 40 kPa as a main component as the binder contained in the electrode mixture powder used in preparing the mixture sheet by a dry method. In addition, the strength of the positive electrode mixture in the thickness direction of the positive electrode was higher in Examples 4 and 6 than in Comparative Example 1. From these results, it can be said that the strength of the mixture sheet in the thickness direction of the electrode can be improved by incorporating a fibrous binder containing polytetrafluoroethylene having a shear bond stress less than or equal to 40 kPa as a main component in the mixture sheet.

With respect to the tensile strength of the mixture sheet, as can be seen from the results of Examples 1 to 6, the tensile strength of the mixture sheet was improved as the shear bond stress of polytetrafluoroethylene decreased.

### [Supplementary Notes]

### Configuration 1:

A method for producing an electrode, including:
a mixture sheet preparation step of preparing a mixture sheet by forming an electrode mixture powder including an active material and a fibrous binder and having a solid content concentration of substantially 100% into a sheet shape; and
a bonding step of bonding the mixture sheet to a surface of a core material,
in which the binder contains polytetrafluoroethylene having a shear bond stress less than or equal to 40 kPa as a main component.

### Configuration 2:

The method for producing an electrode according to the configuration 1, in which when the mixture sheet bonded to the surface of the core material is divided into three equal parts in the thickness direction to form a first region, a second region, and a third region from the core material side, a content (a) of the binder in the first region, a content (b) of the binder in the second region, and a content (c) of the binder in the third region satisfy (c - a)/(a + b + c) ≤ ±10%.

### Configuration 3:

The method for producing an electrode according to the configuration 1 or 2, in which a content of the binder is greater than or equal to 0.1 parts by mass and less than or equal to 5.0 parts by mass with respect to 100 parts by mass of the active material.

### Configuration 4:

The method for producing an electrode according to any one of the configurations 1 to 3, in which the active material is a positive electrode active material, and a proportion of Ni in metal elements other than lithium in the positive electrode active material is greater than or equal to 70%.

### Configuration 5:

An electrode including: a core material and a mixture sheet bonded to a surface of the core material, in which
the mixture sheet contains an active material and a fibrous binder, and
the binder contains polytetrafluoroethylene having a shear bond stress less than or equal to 40 kPa as a main component.

### Configuration 6:

The electrode according to the configuration 5, in which when the mixture sheet is divided into three equal parts in the thickness direction to form a first region, a second region, and a third region from the core material side, a content (a) of the binder in the first region, a content (b) of the binder in the second region, and a content (c) of the binder in the third region satisfy (c - a)/(a + b + c) ≤ ±10%.

### Configuration 7:

The electrode according to the configuration 5 or 6, in which a content of the binder is greater than or equal to 0.1 parts by mass and less than or equal to 5.0 parts by mass with respect to 100 parts by mass of the active material.

### Configuration 8:

A non-aqueous electrolyte secondary battery, including the electrode according to any one of the configurations 5 to 7.

### REFERENCE SIGNS LIST

- 10: Electrode
- 11: Core material
- 12: Mixture sheet
- 20: Electrode mixture powder
- 30: Mixer
- 31: Roll
- 40: First roll
- 41: Second roll
- 42: Third roll
- 43: Fourth roll
- 44: Fifth roll
- 45: Sixth roll
- 46: Seventh roll
- 47: Eighth roll

## Claims

1. A method for producing an electrode, comprising:
a mixture sheet preparation step of preparing a mixture sheet by forming an electrode mixture powder including an active material and a fibrous binder and having a solid content concentration of substantially 100% into a sheet shape; and
a bonding step of bonding the mixture sheet to a surface of a core material,
wherein the binder contains polytetrafluoroethylene having a shear bond stress less than or equal to 40 kPa as a main component.

2. The method for producing an electrode according to claim 1, wherein when the mixture sheet bonded to the surface of the core material is divided into three equal parts in the thickness direction to form a first region, a second region, and a third region from the core material side, a content (a) of the binder in the first region, a content (b) of the binder in the second region, and a content (c) of the binder in the third region satisfy (c - a)/(a + b + c) ≤ ±10%.

3. The method for producing an electrode according to claim 1 or 2, wherein a content of the binder is greater than or equal to 0.1 parts by mass and less than or equal to 5.0 parts by mass with respect to 100 parts by mass of the active material.

4. The method for producing an electrode according to claim 1 or 2, wherein the active material is a positive electrode active material, and a proportion of Ni in metal elements other than lithium in the positive electrode active material is greater than or equal to 70%.

5. An electrode comprising: a core material and a mixture sheet bonded to a surface of the core material, wherein
the mixture sheet contains an active material and a fibrous binder, and
the binder contains polytetrafluoroethylene having a shear bond stress less than or equal to 40 kPa as a main component.

6. The electrode according to claim 5, wherein when the mixture sheet is divided into three equal parts in the thickness direction to form a first region, a second region, and a third region from the core material side, a content (a) of the binder in the first region, a content (b) of the binder in the second region, and a content (c) of the binder in the third region satisfy (c - a)/(a + b + c) ≤ ±10%.

7. The electrode according to claim 5 or 6, wherein a content of the binder is greater than or equal to 0.1 parts by mass and less than or equal to 5.0 parts by mass with respect to 100 parts by mass of the active material.

8. A non-aqueous electrolyte secondary battery, comprising the electrode according to claim 5 or 6.
